# EUROPEAN PATENT SPECIFICATION

(11) **EP 4 354 557 B1**
(45) Date of publication and mention of the grant of the patent: **30.07.2025**
(21) Application number: 22214229.1
(22) Date of filing: 16.12.2022
(51) Int. Cl.: H01M 8/0258, H01M 8/0265, H01M 8/10

(54) **SEPARATOR FOR FUEL CELL**
SEPARATOR FÜR BRENNSTOFFZELLE
SÉPARATEUR POUR PILE À COMBUSTIBLE

(30) Priority: 13.10.2022 KR 20220131791
(43) Date of publication of application: 17.04.2024
(73) Proprietor: Hyundai Motor Company, Seoul 06797 (KR); Kia Corporation, Seocho-gu Seoul 06797 (KR)
(72) Inventor: KIM, Sun Hwi, 16891 Yongin-si (KR); CHOI, Hyun Kyu, 16891 Yongin-si (KR); KIM, Bae Jung, 16891 Yongin-si (KR); KIM, Chan Gi, 16891 Yongin-si (KR); KIM, Hyun Jeong, 16891 Yongin-si (KR); KIM, Ah Reum, 16891 Yongin-si (KR)
(74) Representative: Viering, Jentschura & Partner mbB Patent- und Rechtsanwälte

(56) References cited:
- EP-A1- 4 131 522
- WO-A1-2021/199499
- US-A1- 2011 300 465
- US-B2- 8 557 448

## Description

### CROSS-REFERENCE TO RELATED APPLICATION

This application claims priority to and the benefit of Korean Patent Application No. 10-2022-0131791 filed in the Korean Intellectual Property Office on October 13, 2022.

### TECHNICAL FIELD

The present disclosure relates to a separator for a fuel cell, and more particularly, to a separator for a fuel cell, which is capable of improving performance and operational efficiency.

### BACKGROUND ART

A fuel cell stack refers to a kind of power generation device that generates electrical energy through a chemical reaction of fuel (e.g., hydrogen), and the fuel cell stack may be configured by stacking several tens or hundreds of fuel cells (unit cells) in series.

The fuel cell may include a membrane electrode assembly (MEA) having an electrolyte membrane configured to allow hydrogen positive ions to move therethrough, and electrodes (catalyst electrode layers) coupled to two opposite surfaces of the electrolyte membrane and configured to enable a reaction between hydrogen and oxygen. The fuel cell may also include gas diffusion layers (GDLs) disposed to be in close contact with two opposite surfaces of the membrane electrode assembly and configured to distribute reactant gases and transfer the generated electrical energy, and separators (bipolar plates) disposed to be in close contact with the gas diffusion layers and configured to define flow paths.

The separators may include an anode separator for supplying hydrogen which is fuel, and a cathode separator for supplying air which is an oxidant. The separator may include channels through which the fuel or the oxidant flows, and lands which are in contact with the gas diffusion layers and serve as electrical passageways.

Meanwhile, in order to maximize the performance of the fuel cell stack, it is necessary to increase reaction areas of the reactant gases supplied to the membrane electrode assembly and improve efficiency in transferring the reactant gases.

In particular, the performance and output of the fuel cell stack is determined depending on a transfer flow rate of a reactant gas to be transferred to the membrane electrode assembly. Therefore, it is necessary to ensure a sufficient transfer flow rate of the reactant gas to be transferred to the membrane electrode assembly in order to improve the performance and output of the fuel cell stack.

However, in the related art, the reactant gas supplied between the membrane electrode assembly and the separator is configured to move in a direction parallel to the membrane electrode assembly, which makes it difficult to provide a flow of the reactant gas directed from the separator toward the membrane electrode assembly. For this reason, there is a problem in that it is difficult to ensure a sufficient transfer flow rate of the reactant gas to be transferred to the membrane electrode assembly (i.e., it is difficult to ensure a reaction area of the reactant gas to be supplied to the membrane electrode assembly and ensure efficiency in transferring the reactant gas), which makes it difficult to improve the performance and output of the fuel cell stack.

Further, in the related art, in order to maximize the performance of the fuel cell stack, there has been proposed a method of uniformly distributing a surface pressure of the membrane electrode assembly by providing a porous member, such as metal foam or wire mesh, on the separator (e.g., cathode separator) in order to improve the performance of diffusing reactant gases and discharging produced water (condensate water). However, in the related art, the separate porous member needs to be disposed between the gas diffusion layer and the separator, which complicates a structure of the separator and a process of manufacturing the separator and increases manufacturing costs.

Therefore, recently, various studies have been conducted to simplify a structure of the separator while ensuring the reaction areas of the reactant gases and the efficiency in transferring the reactant gas, but the study results are still insufficient. Accordingly, there is a need to develop a technology for simplifying the structure of the separator while ensuring the reaction areas of the reactant gases and the efficiency in transferring the reactant gas.

WO 2021/199499 A1 discloses a separator for a fuel cell capable of increasing the flow speed of reactant gas in the vicinity of a power generation portion. The separator includes a first protrusion and a second protrusion adjacent to each other and offset from each other in the extending direction of the gas passage formed by the protrusions.

US 2011/300465 A1 discloses a fuel cell stack including coolant channels having a skip cooling structure. The separator includes a fuel cell gas channel, which includes a plurality of wave-shaped channel grooves as fuel gas passages.

US 8 557 448 B2 discloses a separator for a fuel cell, including a gas flow path-forming face. The gas flow path-forming face of the separator has multiple linear gas flow paths that are arranged in parallel to one another, and a gas flow path connection structure that divides the multiple linear gas flow paths into plural linear gas flow path groups and connects at least part of the plural linear gas flow path groups in series.

### SUMMARY

The present disclosure has been made in an effort to provide a separator for a fuel cell, which is capable of improving performance (output) and operational efficiency of a fuel cell stack.

In particular, the present disclosure has been made in an effort to ensure a reaction area of a reactant gas to be supplied to a membrane electrode assembly (reaction layer) and ensure efficiency in transferring the reactant gas.

Among other things, the present disclosure has been made in an effort to provide a flow of the reactant gas in a thickness direction of the separator (i.e., a third direction from the separator toward the membrane electrode assembly) while ensuring a flow of the reactant gas in a planar direction (first direction) of the separator.

The present disclosure has also been made in an effort to simplify a structure and a manufacturing process and reduce manufacturing costs.

The present disclosure has also been made in an effort to improve performance in discharging condensate water and inhibit flooding.

The present disclosure has also been made in an effort to ensure a smooth flow of a coolant and improve cooling performance and cooling efficiency.

The present disclosure has also been made in an effort to improve stability and reliability.

The objects to be achieved by the embodiments are not limited to the above-mentioned objects, but also include objects or effects that may be understood from the solutions or embodiments described below.

A separator for a fuel cell according to the present invention is set forth in claim 1. Preferred embodiments are provided in the dependent claims. An exemplary embodiment of the present disclosure provides a separator for a fuel cell, which is stacked on a reaction layer including a membrane electrode assembly (MEA), the separator including: a plate body stacked on the reaction layer; a wave pattern provided on one surface of the plate body that faces the reaction layer, the wave pattern being configured to define a reaction channel disposed between the reaction layer and the plate body and provided in a first direction in which a reactant gas is supplied, so that the reactant gas flows along the reaction channel; and a land continuously provided along a lateral end of the wave pattern and disposed to be in contact with the reaction layer.

This is to improve performance and operational efficiency of the fuel cell stack.

That is, the performance and output of the fuel cell stack is determined depending on a transfer flow rate of a reactant gas to be transferred to the membrane electrode assembly (reaction layer). Therefore, it is necessary to maximally ensure a transfer flow rate of the reactant gas to be transferred to the membrane electrode assembly in order to improve the performance and output of the fuel cell stack.

However, in the related art, the reactant gas supplied between the membrane electrode assembly and the separator is configured to move in a direction parallel to the membrane electrode assembly, which makes it difficult to provide a flow of the reactant gas directed from the separator toward the membrane electrode assembly. For this reason, there is a problem in that it is difficult to ensure a sufficient transfer flow rate of the reactant gas to be transferred to the membrane electrode assembly (i.e., it is difficult to ensure a reaction area of the reactant gas to be supplied to the membrane electrode assembly and ensure efficiency in transferring the reactant gas), which makes it difficult to improve the performance and output of the fuel cell stack.

Further, in the related art, in order to maximize the performance of the fuel cell stack, there has been proposed a method of uniformly distributing a surface pressure of the membrane electrode assembly by providing a porous member, such as metal foam or wire mesh, on the separator (e.g., cathode separator) in order to improve the performance of diffusing reactant gases and discharging produced water (condensate water). However, in the related art, the separate porous member needs to be disposed between the gas diffusion layer and the separator, which complicates a structure of the separator and a process of manufacturing the separator and increases manufacturing costs.

However, in the embodiment of the present disclosure, the wave pattern is provided on one surface of the plate body that faces the reaction layer, and the reactant gas flows along the wave pattern. Therefore, it is possible to obtain an advantageous effect of ensuring the efficiency in transferring the reactant gas and the reaction area of the reactant gas to be supplied to the membrane electrode assembly (reaction layer).

Among other things, according to the embodiment of the present disclosure, the reactant gas flows along the uneven surface of the wave pattern. Therefore, it is possible to provide the flow of the reactant gas in the thickness direction of the separator (the third direction from the separator toward the membrane electrode assembly) while ensuring the flow of the reactant gas in the planar direction (first direction) of the separator. Therefore, it is possible to obtain an advantageous effect of further improving the performance in transferring the substance to the membrane electrode assembly (the transfer flow rate of the reactant gas) and improving the performance and operational efficiency of the fuel cell stack.

In addition, in the embodiment of the present disclosure, because a porous member is excluded and the separator is in direct contact with the gas diffusion layer, it is possible to reduce contact resistance (electrical resistance) between the gas diffusion layer and the separator and minimize stress concentration. As a result, it is possible to obtain an advantageous effect of minimizing deformation of and damage to the gas diffusion layer at the time of fastening the fuel cell stack and improving durability.

Moreover, in the embodiment of the present disclosure, because the porous member may be excluded, a welding process of coupling the porous member to the separator may be excluded. As a result, it is possible to obtain an advantageous effect of simplifying the structure of the separator and the process of manufacturing the separator.

The wave pattern may have various structures having uneven surfaces such as concave-convex portions.

According to the exemplary embodiment of the present disclosure, the wave pattern may include: a crest portion protruding from one surface of the plate body that faces the reaction layer; and a trough portion connected to an end of the crest portion based on the first direction and configured to define a continuous waveform together with the crest portion.

The crest portion may have various structures capable of protruding from one surface of the plate body.

According to the exemplary embodiment of the present disclosure, the crest portion may include: a first inclined portion configured to guide the reactant gas toward the reaction layer; and a second inclined portion disposed at a downstream side of the first inclined portion and configured to guide the reactant gas, which has passed through the first inclined portion, toward the plate body. According to the exemplary embodiment of the present disclosure, the crest portion may include a flat portion provided between the first inclined portion and the second inclined portion.

A reference height (a height in the thickness direction of the separator) of the crest portion may be variously changed in accordance with required conditions and design specifications.

For example, the crest portion may be defined to have a preset reference height in a third direction that is a thickness direction of the plate body.

According to the exemplary embodiment of the present disclosure, the wave pattern may be provided in plural, the land may be provided in plural, and the plurality of wave patterns and the plurality of lands may be alternately disposed in a second direction that intersects the first direction.

According to the exemplary embodiment of the present disclosure, the separator for a fuel cell may include a cooling channel provided in the other surface of the plate body and configured to allow a coolant to flow therethrough.

The cooling channel may have various structures in accordance with required conditions and design specifications. According to the exemplary embodiment of the present disclosure, the cooling channel may be defined along an internal space of the land.

According to the exemplary embodiment of the present disclosure, the separator for a fuel cell may include a connection cooling channel provided in the other surface of the plate body and configured to connect the adjacent cooling channels so that the adjacent cooling channels communicate with each other.

According to the exemplary embodiment of the present disclosure, the connection cooling channel may be defined along an internal space of the crest portion.

As described above, in the embodiment of the present disclosure, the adjacent cooling channels communicate with each other by means of the connection cooling channel, which makes it possible to further improve the mobility of the coolant. Therefore, it is possible to obtain an advantageous effect of further improving the cooling performance and cooling efficiency implemented by the coolant.

Among other things, in the embodiment of the present disclosure, the connection cooling channel traverses the internal space of the crest portion, such that the other surface of the separator corresponding to a wave channel may be directly cooled, which makes it possible to further improve the cooling performance and cooling efficiency implemented by the coolant.

Moreover, in the embodiment of the present disclosure, because the different cooling channels communicate with each other by means of the connection cooling channel, the coolants flowing along the different cooling channels may be mixed with one another by means of the connection cooling channel. Therefore, it is possible to obtain an advantageous effect of minimizing a temperature deviation between the coolants flowing along the different cooling channels and cooling the entire region of the separator to a uniform temperature.

According to the exemplary embodiment of the present disclosure, the plurality of wave patterns and the plurality of lands may be alternately disposed in the second direction (Y direction), and the crest portions of the respective wave patterns may be disposed on different lines in the second direction.

As described above, in the embodiment of the present disclosure, the plurality of crest portions, which constitutes the different wave patterns, is alternately disposed on the different lines, such that the flow of the reactant gas between the reaction channels may be facilitated (particularly, the reactant gas flowing along a particular reaction channel may smoothly flow to another reaction channel via the gas diffusion layer). Therefore, it is possible to further improve the reaction efficiency of the reactant gas and improve the performance in discharging condensate water from the reaction layer. As a result, it is possible to obtain an advantageous effect of improving the output performance of the fuel cell stack and improving the stability and reliability.

According to the exemplary embodiment of the present disclosure, because the crest portions of the respective wave patterns are disposed on the different lines in the second direction, the connection cooling channels defined along the internal spaces of the crest portions may also be disposed on the different lines in the second direction.

As described above, in the embodiment of the present disclosure, the connection cooling channels defined along the internal spaces of the crest portions are alternately disposed on the different lines. Therefore, it is possible to obtain an advantageous effect of ensuring the smooth flow of the coolant in the first direction (reducing a differential pressure between the cooling channels) while ensuring the flow of the coolant between the different cooling channels.

The first inclined portion and second inclined portion constitute the crest portion, and a first angle of the first inclined portion and the second angle of the second inclined portion may be variously changed in accordance with required conditions and design specifications.

According to the embodiment of the present disclosure, the crest portion, which constitutes the wave pattern, may include a first inclined portion and a second inclined portion, the first inclined portion may be defined to have a first angle, and the second inclined portion may be defined to have a second angle different from the first angle.

In particular, the first angle of the first inclined portion may be defined to be smaller than the second angle of the second inclined portion.

As described above, in the embodiment of the present disclosure, because the first angle of the first inclined portion is smaller than the second angle of the second inclined portion, it is possible to minimize a pressure loss (pressure drop) of the reactant gas caused when the reactant gas comes into contact with the first inclined portion. Further, the reactant gas may more quickly flow along the second inclined portion after the reactant gas passes over the first inclined portion. Therefore, it is possible to obtain an advantageous effect of improving the efficiency in moving (supplying) the reactant gas.

According to the exemplary embodiment of the present disclosure, the reaction channel may include: an inlet portion through which the reactant gas is introduced; a central portion defined at a downstream side of the inlet portion; and an outlet portion defined at a downstream side of the central portion and configured to allow the reactant gas to be discharged therethrough, and the crest portion may be provided in at least any one of the inlet portion, the central portion, and the outlet portion.

According to the exemplary embodiment of the present disclosure, the crest portion may be provided in plural, the plurality of crest portions may be spaced apart from one another in the first direction. The inlet portion, the central portion, and the outlet portion may be defined to be different from one another in terms of reference distances between the adjacent crest portions.

According to the exemplary embodiment of the present disclosure, the reference distance between the crest portions may be defined to decrease toward the downstream side based on the first direction.

This is based on the fact that a concentration of the reactant gas decreases toward the downstream side of the reaction channel based on the first direction (e.g., in the direction from the inlet portion to the outlet portion). The reference distances between the crest portions decrease toward the downstream side of the reaction channel based on the first direction, i.e., the crest portions are densely disposed at intervals that become shorter toward the downstream side of the reaction channel based on the first direction, which makes it possible to adjust a flow velocity (or a flow rate) of the reactant gas passing through the membrane electrode assembly. Therefore, it is possible to obtain an advantageous effect of uniformly maintaining the reaction efficiency and the performance in transferring the substance to the membrane electrode assembly (the transfer flow rate of the reactant gas) in the entire section of the reaction channel.

According to the exemplary embodiment of the present disclosure, it is possible to adjust the performance in transferring the substance to the membrane electrode assembly for each of the sections of the reaction channel by differently defining reference heights of the crest portions constituting the wave pattern so that the sections (e.g., the inlet portion, the central portion, and the outlet portion) of the reaction channel are different from one another in terms of reference heights.

According to the exemplary embodiment of the present disclosure, the wave pattern may include: a first crest portion provided on one surface of the plate body and defined to have a first reference height in a thickness direction of the plate body; and a second crest portion spaced apart from the first crest portion in the first direction, provided at a downstream side of the first crest portion, and defined to have a second reference height different from the first reference height.

In particular, the second reference height of the second crest portion may be defined to be larger than the first reference height of the first crest portion.

Because the second reference height of the second crest portion positioned at the downstream side of the first crest portion is larger than the first reference height of the first crest portion as described above, it is possible to adjust the flow velocity (or the flow rate) of the reactant gas passing through the membrane electrode assembly even though the concentration of the reactant gas decreases toward the downstream side of the reaction channel. Therefore, it is possible to obtain an advantageous effect of uniformly maintaining the reaction efficiency and the performance in transferring the substance to the membrane electrode assembly (the transfer flow rate of the reactant gas) in the entire section of the reaction channel.

### BRIEF DESCRIPTION OF THE DRAWINGS

FIG. 1 is a view for explaining a fuel cell stack to which a separator for a fuel cell according to an embodiment of the present disclosure is applied.
FIG. 2 is a view for explaining the separator for a fuel cell according to the embodiment of the present disclosure.
FIG. 3 is a view for explaining a wave pattern of the separator for a fuel cell according to the embodiment of the present disclosure.
FIGS. 4 and 5 are views for explaining a connection cooling channel of the separator for a fuel cell according to the embodiment of the present disclosure.
FIGS. 6 to 9 are views for explaining modified examples of the wave pattern of the separator for a fuel cell according to the embodiment of the present disclosure.

### DETAILED DESCRIPTION

Hereinafter, exemplary embodiments of the present disclosure will be described in detail with reference to the accompanying drawings.

However, the scope of the present invention is defined by the appended claims and not limited to some embodiments described herein.

In addition, unless otherwise specifically and explicitly defined and stated, the terms (including technical and scientific terms) used in the embodiments of the present disclosure may be construed as the meaning which may be commonly understood by the person with ordinary skill in the art to which the present disclosure pertains. The meanings of the commonly used terms such as the terms defined in dictionaries may be interpreted in consideration of the contextual meanings of the related technology.

In addition, the terms used in the embodiments of the present disclosure are for explaining the embodiments, not for limiting the present disclosure.

In the present specification, unless particularly stated otherwise, a singular form may also include a plural form. The expression "at least one (or one or more) of A, B, and C" may include one or more of all combinations that can be made by combining A, B, and C.

In addition, the terms such as first, second, A, B, (a), and (b) may be used to describe constituent elements of the embodiments of the present disclosure.

These terms are used only for the purpose of discriminating one constituent element from another constituent element, and the nature, the sequences, or the orders of the constituent elements are not limited by the terms.

Further, when one constituent element is described as being 'connected', 'coupled', or 'attached' to another constituent element, one constituent element may be connected, coupled, or attached directly to another constituent element or connected, coupled, or attached to another constituent element through still another constituent element interposed therebetween.

In addition, the expression "one constituent element is provided or disposed above (on) or below (under) another constituent element" includes not only a case in which the two constituent elements are in direct contact with each other, but also a case in which one or more other constituent elements are provided or disposed between the two constituent elements. The expression "above (on) or below (under)" may mean a downward direction as well as an upward direction based on one constituent element.

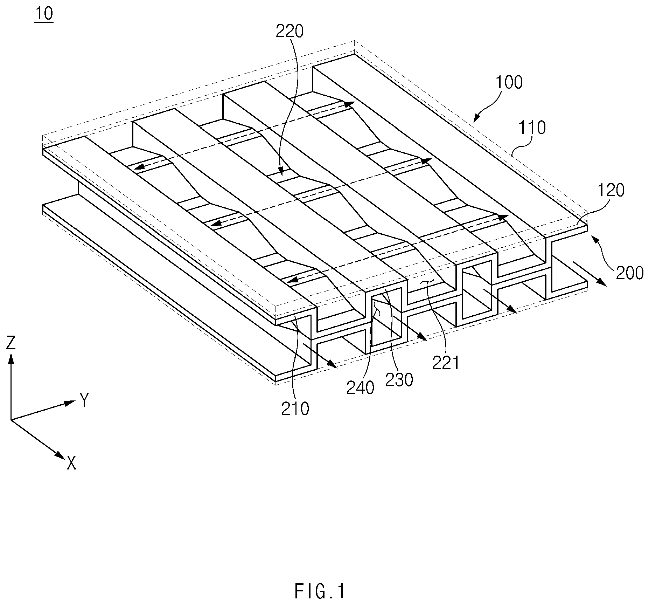

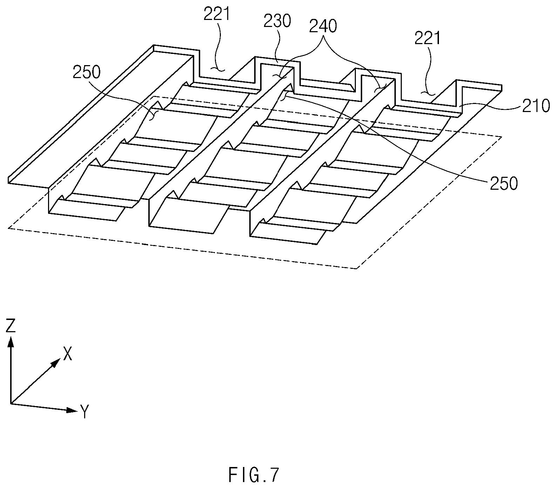

Referring to FIGS. 1 to 9, a fuel cell stack 10 according to an embodiment of the present disclosure includes: a reaction layer 100 including a membrane electrode assembly (MEA) 110; a plate body 210 stacked on the reaction layer 100; wave patterns 220 provided on one surface of the plate body 210 that faces the reaction layer 100, the wave patterns 220 being configured to define reaction channels 221 disposed between the reaction layer 100 and the plate body 210 and provided in a first direction (X direction) in which a reactant gas is supplied, so that the reactant gas flows along the reaction channels 221; and lands 230 provided along lateral ends of the wave patterns 220 and disposed to be in contact with the reaction layer 100.

For reference, the fuel cell stack 10 may be configured by stacking a plurality of unit cells in a reference direction (e.g., an upward/downward direction (Z direction) based on FIG. 1).

The fuel cell (unit cell) may include the reaction layer 100, and separators 200 respectively stacked on two opposite sides of the reaction layer 100. The fuel cell stack 10 may be configured by stacking the plurality of fuel cells in the reference direction and then assembling end plates (not illustrated) with the two opposite ends of the plurality of fuel cells.

More specifically, the reaction layer 100 includes the membrane electrode assembly (MEA) 110 configured such that catalyst electrode layers, in which an electrochemical reaction occurs, are attached to two opposite sides of an electrolyte membrane in which hydrogen ions move. The reaction layer 100 may further include gas diffusion layers (GDL) 120 stacked on the membrane electrode assembly 110 and configured to uniformly distribute the reactant gases and transfer produced electrical energy.

The membrane electrode assembly 110 serves to generate electricity by means of an oxidation-reduction reaction between fuel (e.g., hydrogen), which is a first reactant gas, and an oxidant (e.g., air) which is a second reactant gas.

The membrane electrode assembly 110 may be variously changed in structure and material in accordance with required conditions and design specifications, and the present disclosure is not limited or restricted by the structure and material of the membrane electrode assembly 110.

For example, the membrane electrode assembly 110 includes the electrolyte membrane through which hydrogen ions move, and the catalyst electrode layers attached to two opposite surfaces of the electrolyte membrane, and the electrochemical reactions occur in the catalyst electrode layers.

The gas diffusion layers (GDLs) 120 are stacked on the two opposite sides of the membrane electrode assembly 110 and serve to uniformly distribute the reactant gases and transfer the produced electrical energy.

The gas diffusion layer 120 may have various structures capable of diffusing the reactant gas. For example, the gas diffusion layer 120 may have a porous structure having pores each having a predetermined size.

The sizes of the pores and the material of the gas diffusion layer 120 may be variously changed in accordance with required conditions and design specifications, and the present disclosure is not limited or restricted by the sizes of the pores and the material of the gas diffusion layer 120.

The separators 200 are provided to serve not only to block (separate) hydrogen and air, which are the reactant gases, but also to ensure flow paths of the reactant gases and transfer electric current to an external circuit.

In addition, the separators 200 may also serve to distribute heat, which is generated in the fuel cell (unit cell), to the entire fuel cell, and the excessively generated heat may be discharged to the outside by a coolant flowing along cooling channels 240 between the separators 200.

In the exemplary embodiment of the present disclosure, the separators 200 may be defined as including both an anode separator having flow paths for hydrogen which is fuel, and a cathode separator having flow paths for air which is an oxidant.

For example, the separator 200 may be made of a thin film metal (e.g., stainless steel, Inconel, or aluminum). The separators 200 (the anode separator and the cathode separator), together with the reaction layer 100, may constitute a single fuel cell (unit cell) and each independently define the flow paths of the hydrogen, the air, and the coolant. According to another embodiment of the present disclosure, the separator may be made of another material such as graphite or a carbon composite.

For reference, hydrogen, which is the fuel, and air, which is the oxidant, are supplied to an anode (not illustrated) and a cathode (not illustrated) of the membrane electrode assembly 110, respectively, through the reaction channels 221 of the separators 200 (the cathode separator and the anode separator). The hydrogen may be supplied to the anode, and the air may be supplied to the cathode.

The hydrogen supplied to the anode is decomposed into hydrogen ions (protons) and electrons by catalysts in the electrode layers respectively provided on the two opposite sides of the electrolyte membrane. Only the hydrogen ions are selectively transferred to the cathode through the electrolyte membrane, which is a cation exchange membrane, and at the same time, the electrons are transferred to the cathode through the gas diffusion layer 120 and the separator 200 which are conductors.

At the cathode, the hydrogen ions supplied through the electrolyte membrane and the electrons transferred through the separator 200 meet oxygen in the air supplied to the cathode by an air supply device, thereby creating a reaction of producing water. As a result of the movement of the hydrogen ions, the electrons flow through external conductive wires, and the electric current is generated as a result of the flow of the electrons.

For example, referring to FIG. 1, the separator 200 (e.g., the anode separator) for supplying hydrogen may be disposed on one surface of the membrane electrode assembly 110, and the separator 200 (e.g., the cathode separator) for supplying air may be disposed on the other surface of the membrane electrode assembly 110.

More specifically, the separator 200 includes: the plate body 210 stacked on an outer surface of the reaction layer 100 (i.e., an outer surface of the gas diffusion layer stacked on the membrane electrode assembly); the wave patterns 220 provided on one surface of the plate body 210 that faces the reaction layer 100, the wave patterns 220 being configured to define the reaction channels 221 disposed between the reaction layer 100 and the plate body 210 and provided in the first direction (X direction) in which the reactant gas is supplied, so that the reactant gas flows along the reaction channels 221; and the lands 230 provided along the lateral ends of the wave patterns 220 and disposed to be in contact with the reaction layer 100.

Referring to FIGS. 1 to 3, the plate body 210 may be provided in the form of a flat, thin film plate. The present disclosure is not limited or restricted by the size, material, and structure of the plate body 210.

For example, the plate body 210 may be provided in the form of a flat quadrangular plate and made of a typical metal material (e.g., stainless steel, Inconel, or aluminum).

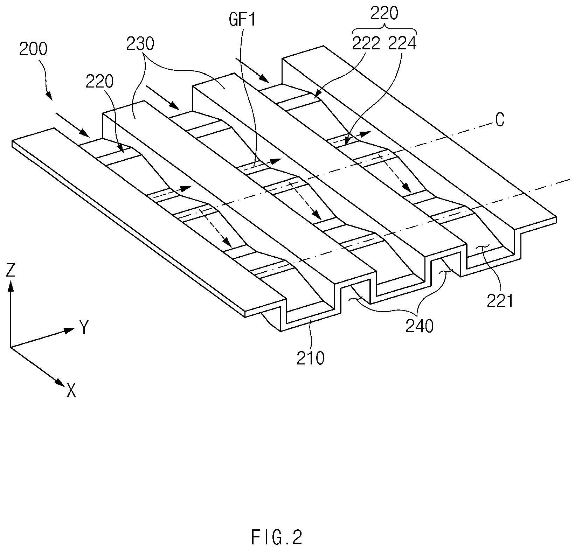

The wave pattern 220 is provided on one surface of the plate body 210 (i.e., an upper surface of the plate body based on FIG. 2), which faces the reaction layer 100, and configured to define the reaction channel 221 disposed in the first direction (X direction) in which the reactant gas is supplied, so that the reactant gas flows along the reaction channel 221.

For reference, in the embodiment of the present disclosure, the first direction (X direction) may be defined as a direction in which the reactant gas is supplied from one end of the separator 200 toward the inside of the separator 200 (or the other end of the separator).

The wave pattern 220 may have various structures having uneven surfaces such as concave-convex portions. The present disclosure is not restricted or limited by the structure and shape of the wave pattern 220.

According to the embodiment of the present disclosure, the wave pattern 220 may include: crest portions 222 protruding from one surface of the plate body 210 that faces the reaction layer 100; and trough portions 224 connected to ends of the crest portions 222 based on the first direction (X direction) and configured to define a continuous waveform together with the crest portions 222.

The crest portion 222 may have various structures capable of protruding from one surface of the plate body 210. The present disclosure is not restricted or limited by the structure and shape of the crest portion 222.

According to the embodiment of the present disclosure, the crest portion 222 may include: a first inclined portion 222a configured to guide the reactant gas toward the reaction layer 100; a second inclined portion 222c disposed at a downstream side of the first inclined portion 222a and configured to guide the reactant gas, which has passed through the first inclined portion 222a, toward the plate body 210; and a flat portion 222b provided between the first inclined portion 222a and the second inclined portion 222c. The first inclined portion 222a, the second inclined portion 222c, and the flat portion 222b may collectively define an approximately trapezoidal shape.

For example, the first inclined portion 222a may have an approximately straight shape having a first angle θ1, and the second inclined portion 222c may have an approximately straight shape having a second angle θ2. According to another embodiment of the present disclosure, the first inclined portion and the second inclined portion may each have a curved shape (e.g., a circular arc shape) or a combination of a straight shape and a curved shape.

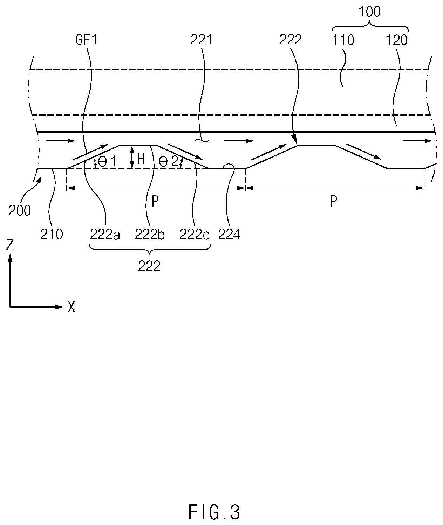

The first angle θ1 of the first inclined portion 222a and the second angle θ2 of the second inclined portion 222c may be variously changed in accordance with required conditions and design specifications. The present disclosure is not restricted or limited by the first angle θ1 and the second angle θ2. For example, referring to FIG. 3, the first angle θ1 of the first inclined portion 222a and the second angle θ2 of the second inclined portion 222c may be defined to be equal to each other.

For reference, in the embodiment of the present disclosure illustrated and described above, the example has been described in which the crest portion 222 includes the first inclined portion 222a, the second inclined portion 222c, and the flat portion 222b. However, according to another embodiment of the present disclosure, the crest portion having an approximately triangular shape may be configured only by the first inclined portion and the second inclined portion without a flat portion.

The crest portion 222 may be variously changed in reference height (height in the thickness direction of the separator) H in accordance with required conditions and design specifications. The present disclosure is not restricted or limited by the reference height H of the crest portion 222.

For reference, as the reference height of the crest portion 222 increases, a concentration of the reactant gas, which is transferred to the reaction layer 100 while flowing over the crest portion 222, may increase. As the reference height of the crest portion 222 increases, the concentration of the reactant gas to be transferred to the reaction layer 100 may increase. However, a flow of the reactant gas in the first direction (X direction) may decrease (a differential pressure may be increased) by the crest portion 222. Therefore, the reference height of the crest portion 222 may be determined under a condition in which a smooth flow of the reactant gas in the first direction (X direction) may be ensured.

For example, a plurality of crest portions 222, which constitutes the wave pattern 220, may be configured to have the same preset reference height H in a third direction (Z direction), i.e., the thickness direction of the plate body 210.

The trough portion 224 may have various structures capable of defining a continuous waveform together with the crest portion 222. The present disclosure is not restricted or limited by the structure and shape by the trough portion 224.

For example, the trough portion 224 may have an approximately flat, straight shape. According to another embodiment of the present disclosure, the trough portion may have a concave shape or a bent curved shape.

In particular, the crest portions 222 and the trough portions 224 may be alternately disposed in the first direction (X direction).

For example, the plurality of crest portions 222 may be provided to be spaced apart from one another at a preset reference distance (pitch) P in the first direction (X direction). In this case, the reference distance (pitch) P between the crest portions 222 may be defined as a total sum of a length of a straight line (a length of a bottom side) of the first inclined portion 222a in the first direction (X direction), a length of the flat portion 222b in the first direction (X direction), a length of a straight line (a length of a bottom side) of the second inclined portion 222c in the first direction (X direction), and a length of a straight line of the trough portion 224 in the first direction (X direction).

The wave pattern 220 may be provided in various ways in accordance with required conditions and design specifications. In particular, the wave pattern 220 may be provided integrally with the plate body 210 by partially processing (e.g., pressing) a part of the plate body 210.

More particularly, the wave pattern 220 may be provided as a relief on one surface of the plate body 210 by partially processing (e.g., pressing) a part of the plate body 210. Further, the wave pattern 220 may have the same thickness as the plate body 210.

Because the wave pattern 220 is provided by partially processing a part of the plate body 210 as described above, it is possible to obtain an advantageous effect of simplifying a manufacturing process of providing the wave pattern 220 and reducing manufacturing costs thereof.

According to another embodiment of the present disclosure, the wave pattern may be provided on the plate body by die casting or cutting. Alternatively, the wave pattern may be manufactured separately from the plate body and then attached or coupled to the plate body.

The land 230 is provided along the lateral end of the wave pattern 220. A surface of the land 230 (an uppermost surface adjacent to the reaction layer) (not illustrated) is in contact with the reaction layer 100 (the gas diffusion layer of the reaction layer).

The land 230 may have various structures capable of being in contact with the reaction layer 100. The present disclosure is not limited or restricted by the shape and the structure of the land 230.

The land 230 is continuously provided along the lateral end of the wave pattern 220 so as to have an approximately quadrangular, straight block shape. According to another embodiment of the present disclosure, the land may have a curved shape or other shapes.

According to the embodiment of the present disclosure, the plurality of wave patterns 220 and the plurality of lands 230 may be alternately disposed in a second direction (Y direction) intersecting the first direction (X direction).

In addition, the second direction (Y direction) may be defined as various directions that intersect the first direction (X direction) on the same plane. In particular, the first direction (X direction) and the second direction (Y direction) may be defined to be perpendicular (orthogonal) to each other.

Hereinafter, an example will be described in which the crest portions 222 of the respective wave patterns 220 are disposed on the same line C in the second direction (Y direction).

Further, a width (a width in the second direction) of the land 230 and a height (a height in the thickness direction of the separator) of the land 230 may be variously changed in accordance with required conditions and design specifications. The present disclosure is not restricted or limited by the height and width of the land 230.

The land 230 may be provided in various ways in accordance with required conditions and design specifications. In particular, the land 230 may be provided integrally with the plate body 210 by partially processing (e.g., pressing) a part of the plate body 210. In particular, the wave pattern 220 and the land 230 may be provided together through a single process.

Like the wave pattern 220, the land 230 may be provided as a relief on one surface (a surface facing the reaction layer) of the plate body 210 by partially processing a part of the plate body 210. The land 230 may have the same thickness as the wave pattern 220 and the plate body 210.

Because the land 230 is provided by partially processing a part of the plate body 210 as described above, it is possible to obtain an advantageous effect of simplifying the manufacturing process of providing the land 230 and reducing manufacturing costs thereof.

According to another embodiment of the present disclosure, the land may be provided on a stepped portion by die casting or cutting. Otherwise, the land may be manufactured separately from the plate body and then attached or coupled to the plate body.

The reaction channel 221 is defined between the plate body 210 and the reaction layer 100 and disposed between the adjacent lands 230. The reactant gas supplied to the separator 200 may flow in the first direction (X direction) along the reaction channel 221.

As described above, according to the embodiment of the present disclosure, the reactant gas supplied to the separator 200 flows along the wave pattern 220 having an uneven surface. Therefore, it is possible to ensure the flow of the reactant gas in the planar direction (first direction) of the separator 200, and to provide the flow (GF1 in FIGS. 2 and 3) of the reactant gas in the thickness direction of the separator 200 (the third direction from the separator toward the membrane electrode assembly). Therefore, it is possible to obtain an advantageous effect of improving the performance in transferring the substance to the membrane electrode assembly 110 (the transfer flow rate of the reactant gas) and improving the performance and operational efficiency of the fuel cell stack 10.

In particular, in the embodiment of the present disclosure, as the reactant gas flows over the crest portion 222, a flow GF1 of the reactant gas is defined in the direction from the separator 200 to the reaction layer 100. As a result, it is possible to obtain an advantageous effect of further improving the performance in transferring the reactant gas to the reaction layer 100.

Referring to FIGS. 1 to 2, according to the embodiment of the present disclosure, the separator 200 for a fuel cell may include the cooling channels 240 provided on the other surface of the plate body 210 and configured to allow the coolant to flow therethrough.

The cooling channel 240 may have various structures in accordance with required conditions and design specifications, and the present disclosure is not limited or restricted by the cooling channel 240.

In particular, the cooling channel 240 is continuously defined along an internal space of the land 230.

In this case, the configuration in which the cooling channel 240 is defined as the internal space of the land 230 may be understood as a configuration in which the cooling channel 240 is provided as a space (recessed space) provided in the other surface of the plate body 210 so as to correspond to the land 230 when the land 230 is provided on the plate body 210.

Because the lands 230 and the cooling channels 240 are provided together on the plate body 210 as described above, it is possible to obtain an advantageous effect of simplifying the structure of the separator 200 and the process of manufacturing the separator 200.

In particular, at least two plate bodies 210 may be provided to be in close contact with each other, and the cooling channels 240 provided in the plate bodies 210, respectively, may be disposed to communicate with one another.

For example, the two plate bodies 210 may be in close contact with each other (the other surfaces of the plate bodies may be in close contact with each other while facing each other) in order to define the different unit cells. The cooling channels 240 respectively provided in the plate bodies 210 may define a common cooling channel (not illustrated) while communicating with one another.

Because the two cooling channels 240 communicate with each other as described above, it is possible to provide the common cooling channel having a further expanded cross-sectional area (e.g., twice the cross-sectional area of the cooling channel), thereby improving the flowability of the coolant. As a result, it is possible to obtain an advantageous effect of improving cooling performance and cooling efficiency implemented by the coolant.

According to the embodiment of the present disclosure, the separator 200 for a fuel cell may include connection cooling channels 250 provided in the other surface of the plate body 210 and configured to connect the adjacent cooling channels 240 so that the adjacent cooling channels 240 communicate with each other.

The connection cooling channel 250 may have various structures capable of connecting the adjacent cooling channels 240 so that the adjacent cooling channels 240 communicate with each other. The present disclosure is not restricted or limited by the connection cooling channel 250.

According to the embodiment of the present disclosure, the connection cooling channel 250 may be defined along an internal space of the crest portion 222.

In this case, the configuration in which the connection cooling channel 250 is defined as the internal space of the crest portion 222 may be understood as a configuration in which the connection cooling channel 250 is provided as a space (recessed space) provided in the other surface of the plate body 210 so as to correspond to the crest portion 222 when the crest portion 222 is provided on the plate body 210. Because the crest portions 222 and the connection cooling channels 250 are provided together on the plate body 210 as described above, it is possible to obtain an advantageous effect of simplifying the structure of the separator 200 and the process of manufacturing the separator 200.

As described above, in the embodiment of the present disclosure, the adjacent cooling channels 240 communicate with each other by means of the connection cooling channel 250, which makes it possible to further improve the mobility of the coolant. Therefore, it is possible to obtain an advantageous effect of further improving the cooling performance and cooling efficiency implemented by the coolant.

Among other things, in the embodiment of the present disclosure, the connection cooling channel 250 traverses the internal space of the crest portion 222, such that the other surface of the separator 200 corresponding to a wave channel may be directly cooled, which makes it possible to further improve the cooling performance and cooling efficiency implemented by the coolant.

Moreover, in the embodiment of the present disclosure, because the different cooling channels 240 communicate with each other by means of the connection cooling channel 250, the coolants flowing along the different cooling channels 240 may be mixed with one another by means of the connection cooling channel 250. Therefore, it is possible to obtain an advantageous effect of minimizing a temperature deviation between the coolants flowing along the different cooling channels 240 and cooling the entire region of the separator 200 to a uniform temperature.

In the embodiment of the present disclosure illustrated and described above, the example has been described in which the plurality of wave patterns 220 and the plurality of lands 230 are alternately disposed in the second direction (Y direction), and the crest portions 222 of the respective wave patterns 220 are disposed on the same line C in the second direction (Y direction). However, according to another embodiment of the present disclosure, the crest portions of the respective wave patterns may be disposed on different lines in the second direction.

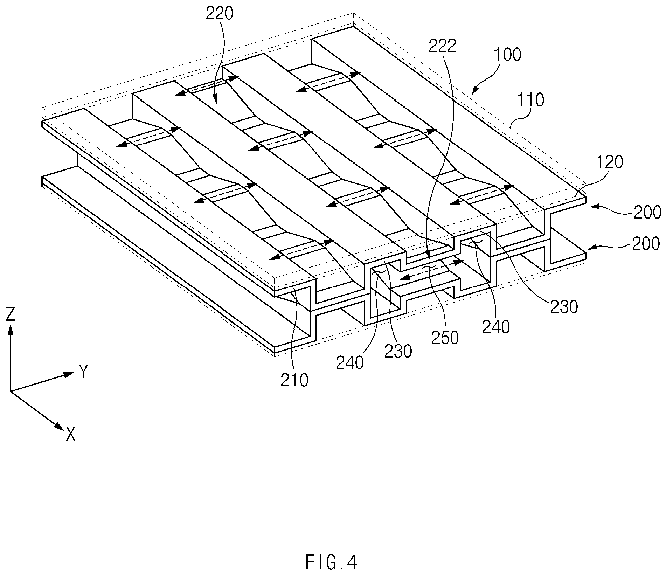

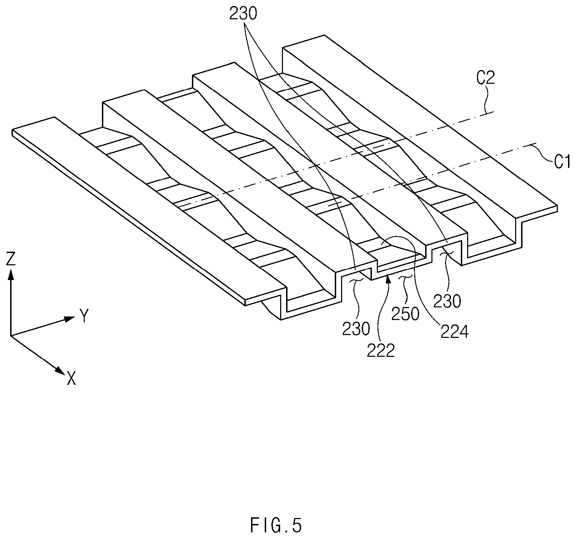

Referring to FIGS. 4 and 5, according to the embodiment of the present disclosure, the plurality of wave patterns 220 and the plurality of lands 230 may be alternately disposed in the second direction (Y direction), and the crest portions 222 of the respective wave patterns 220 may be disposed on different lines in the second direction (Y direction).

For example, the crest portion 222, which constitutes at least any one of the plurality of wave patterns 220, may be disposed in the second direction (Y direction) based on a first line C1. The crest portion 222, which constitutes another of the plurality of wave patterns 220, may be disposed in the second direction (Y direction) based on a second line C2 spaced apart from the first line C1.

As described above, in the embodiment of the present disclosure, the plurality of crest portions 222, which constitutes the different wave patterns 220, is alternately disposed on the different lines, such that the flow of the reactant gas between the reaction channels may be facilitated (the reactant gas flowing along a particular reaction channel may smoothly flow to another reaction channel via the gas diffusion layer). Therefore, it is possible to further improve the reaction efficiency of the reactant gas and improve the performance in discharging condensate water from the reaction layer. As a result, it is possible to obtain an advantageous effect of improving the output performance of the fuel cell stack 10 and improving the stability and reliability thereof.

In addition, referring to FIG. 4, because the crest portions 222 of the respective wave patterns 220 are disposed on the different lines in the second direction (Y direction), the connection cooling channels 250 defined along the internal spaces of the crest portions 222 may also be disposed on the different lines in the second direction (Y direction).

As described above, in the embodiment of the present disclosure, the connection cooling channels 250 defined along the internal spaces of the respective crest portions 222 are alternately disposed on the different lines. Therefore, it is possible to obtain an advantageous effect of ensuring the smooth flow of the coolant in the first direction (X direction) (reducing a differential pressure between the cooling channels) while ensuring the flow of the coolant between the different cooling channels 240.

Meanwhile, in the embodiment of the present disclosure illustrated and described above, the example has been described in which the first angle θ1 of the first inclined portion 222a constituting the crest portion 222 is equal to the second angle θ2 of the second inclined portion 222c constituting the crest portion 222. However, according to another embodiment of the present disclosure, the first angle of the first inclined portion constituting the crest portion may be different from the second angle of the second inclined portion constituting the crest portion.

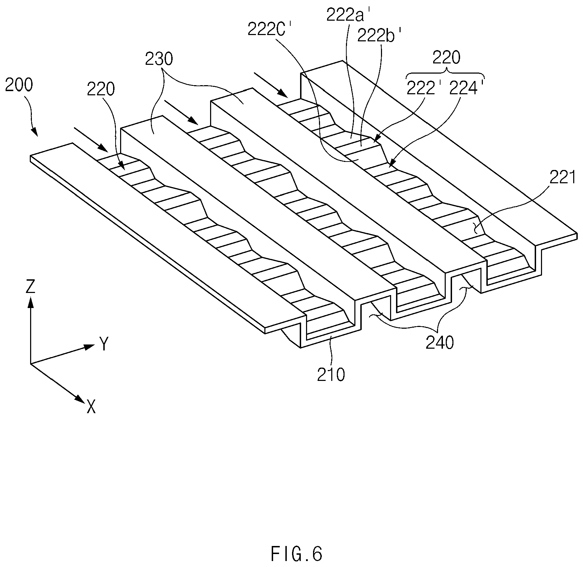

Referring to FIGS. 6 to 9, according to the embodiment of the present disclosure, crest portions 222' and 222" constituting the wave pattern 220 respectively include first inclined portions 222a' and 222a" and second inclined portions 222c' and 222c". The first inclined portions 222a' and 222a" may be defined to respectively have first angles θ1' and θ1", and the second inclined portions 222c' and 222c" may be defined to respectively have second angles θ2' and θ2" different from the first angles θ1' and θ1".

In particular, the first angles θ1' and θ1" of the first inclined portions 222a' and 222a" may be defined to be smaller than the second angles θ2' and θ2" of the second inclined portions 222c' and 222c".

As described above, in the embodiment of the present disclosure, because the first angles θ1' and θ1" of the first inclined portions 222a' and 222a" are smaller than the second angles θ2' and θ2" of the second inclined portions 222c' and 222c" (e.g., θ1'<θ2'), it is possible to minimize a pressure loss (pressure drop) of the reactant gas caused when the reactant gas comes into contact with the first inclined portions 222a' and 222a". Further, the reactant gas may more quickly flow along the second inclined portions 222c' and 222c" after the reactant gas passes over the first inclined portions 222a' and 222a". Therefore, it is possible to obtain an advantageous effect of improving the efficiency in moving (supplying) the reactant gas.

More particularly, the length of each of the first inclined portions 222a' and 222a" (or the length of the straight line of the first inclined portion in the first direction) may be defined to be longer than the length of each of the second inclined portions 222c' and 222c" (or the length of the straight line of the second inclined portion in the first direction).

Because the length of each of the first inclined portions 222a' and 222a" is longer than the length of each of the second inclined portions 222c' and 222c" as described above, it is possible to ensure a sufficient section in which a flow of the reactant gas is generated substantially in the thickness direction of the separator 200 (the third direction from the separator toward the membrane electrode assembly). Therefore, it is possible to obtain an advantageous effect of further improving the performance in transferring the substance to the membrane electrode assembly 110 (the transfer flow rate of the reactant gas).

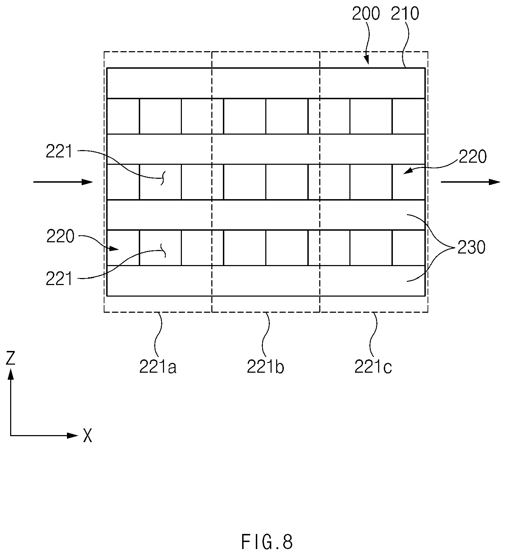

Referring to FIG. 8, according to the embodiment of the present disclosure, the reaction channel 221 may include: an inlet portion 221a through which the reactant gas is introduced; a central portion 221b defined at a downstream side of the inlet portion 221a; and an outlet portion 221c defined at a downstream side of the central portion 221b and configured to allow the reactant gas to be discharged therethrough. The crest portion 222 may be provided in at least any one of the inlet portion 221a, the central portion 221b, and the outlet portion 221c.

Hereinafter, an example will be described in which the crest portions 222 are provided in the entire section of the reaction channel 221 (e.g., over the inlet portion, the central portion, and the outlet portion). According to another embodiment of the present disclosure, the crest portion may be provided only in the inlet portion of the reaction channel, or the crest portion may be provided only in the outlet portion of the reaction channel. Alternatively, it is possible to provide the crest portions only in the inlet portion of the reaction channel and the outlet portion of the reaction channel without providing the crest portion in the central portion of the reaction channel.

According to the embodiment of the present disclosure, the plurality of crest portions 222 may be disposed to be spaced apart from one another in the first direction (X direction). The inlet portion 221a, the central portion 221b, and the outlet portion 221c may be defined to be different from one another in terms of reference distances between the adjacent crest portions 222.

In particular, the reference distances between the crest portions 222 may be defined to decrease toward the downstream side in the first direction (X direction). For example, the reference distance may be defined to decrease in the direction from the inlet portion 221a toward the outlet portion 221c.

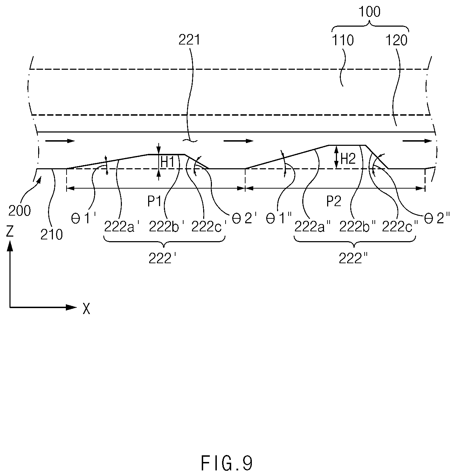

For example, referring to FIG. 9, the wave pattern 220 may include the first crest portion 222' defined to have a first reference distance P1, and the second crest portion 222" provided at the downstream side of the first crest portion 222' based on the first direction (X direction) and defined to have a reference distance P2 shorter than the first reference distance P1.

This is based on the fact that a concentration of the reactant gas decreases toward the downstream side of the reaction channel 221 based on the first direction (X direction) (e.g., in the direction from the inlet portion to the outlet portion). The reference distances between the crest portions 222 decrease toward the downstream side of the reaction channel 221 based on the first direction (X direction) (P1>P2), i.e., the crest portions 222 are densely disposed at intervals that become shorter toward the downstream side of the reaction channel 221 based on the first direction (X direction), which makes it possible to adjust a flow velocity (or a flow rate) of the reactant gas passing through the membrane electrode assembly 110 (e.g., increase a flow velocity of the reactant gas toward the downstream side of the reaction channel). Therefore, it is possible to obtain an advantageous effect of uniformly maintaining the reaction efficiency and the performance in transferring the substance to the membrane electrode assembly 110 (the transfer flow rate of the reactant gas) in the entire section of the reaction channel 221.

In the above-mentioned embodiment, the example has been described in which the performance in transferring the substance to the membrane electrode assembly 110 (the transfer flow rate of the reactant gas) is adjusted for each of the sections of the reaction channel 221 on the basis of the reference distance (e.g., P1 or P2) between the crest portions 222. However, according to another embodiment of the present disclosure, the performance in transferring the substance to the membrane electrode assembly may be adjusted for each of the sections of the reaction channel on the basis of reference heights of the crest portions.

According to the embodiment of the present disclosure, it is possible to adjust the performance in transferring the substance to the membrane electrode assembly 110 for each of the sections of the reaction channel 221 by differently defining reference heights (e.g., H1 and H2) of the crest portions 222' and 222" constituting the wave pattern 220 so that the sections (e.g., the inlet portion, the central portion, and the outlet portion) of the reaction channel 221 are different from one another in terms of reference heights.

More specifically, referring to FIG. 9, the wave pattern 220 may include: the first crest portion 222' provided on one surface of the plate body 210 and defined to have a first reference height H1 in the thickness direction of the plate body 210; and the second crest portion 222" provided at the downstream side of the first crest portion 222', spaced apart from the first crest portion 222' in the first direction (X direction), and defined to have a second reference height H2 different from the first reference height H1.

In particular, the second reference height H2 of the second crest portion 222" may be defined to be larger than the first reference height H1 of the first crest portion 222'.

Because the second reference height H2 of the second crest portion 222" positioned at the downstream side of the first crest portion 222' is larger than the first reference height H1 of the first crest portion 222' as described above, it is possible to adjust the flow velocity (or the flow rate) of the reactant gas passing through the membrane electrode assembly 110 (e.g., increase the flow velocity of the reactant gas toward the downstream side of the reaction channel) even though the concentration of the reactant gas decreases toward the downstream side of the reaction channel 221. Therefore, it is possible to obtain an advantageous effect of uniformly maintaining the reaction efficiency and the performance in transferring the substance to the membrane electrode assembly 110 (the transfer flow rate of the reactant gas) in the entire section of the reaction channel 221.

According to the embodiment of the present disclosure described above, it is possible to obtain an advantageous effect of improving the performance (output) and operational efficiency of the fuel cell stack.

In particular, according to the embodiment of the present disclosure, it is possible to obtain an advantageous effect of improving the efficiency in transferring the reactant gas and the reaction area of the reactant gas to be supplied to the membrane electrode assembly (reaction layer).

Among other things, according to the embodiment of the present disclosure, it is possible to obtain an advantageous effect of providing the flow of the reactant gas in the thickness direction of the separator (the third direction from the separator toward the membrane electrode assembly) while ensuring the flows of the reactant gas in planar directions of the separator (in the first direction). Further, it is possible to obtain an advantageous effect of further improving the performance in transferring the substance (the performance in transferring the reactant gas) to the membrane electrode assembly (reaction layer).

In addition, according to the embodiment of the present disclosure, it is possible to obtain an advantageous effect of reducing contact resistance (electrical resistance) between the gas diffusion layer and the separator and improving the output of the fuel cell stack.

In addition, according to the embodiment of the present disclosure, it is possible to obtain an advantageous effect of simplifying the structure and the manufacturing process and reducing the manufacturing costs.

In addition, according to the embodiment of the present disclosure, it is possible to obtain an advantageous effect of improving the performance in discharging condensate water and inhibiting flooding.

In addition, according to the embodiment of the present disclosure, it is possible to obtain an advantageous effect of ensuring a smooth flow of the coolant and improving the cooling performance and cooling efficiency.

In addition, according to the embodiment of the present disclosure, it is possible to obtain an advantageous effect of improving stability and reliability.

While the embodiments have been described above, the embodiments are just illustrative and not intended to limit the present disclosure. It can be appreciated by those skilled in the art that various modifications and applications, which are not described above, may be made to the present embodiment within the scope of the invention as defined by the appended claims. For example, the respective constituent elements specifically described in the embodiments may be modified and then carried out. Further, it should be interpreted that the differences related to the modifications and applications are included in the scope of the present disclosure defined by the appended claims.

## Claims

1. A separator (200) for a fuel cell, which is stacked on a reaction layer (100) including a membrane electrode assembly, MEA, (110), the separator (200) comprising:
a plate body (210) stacked on the reaction layer (100);
a wave pattern (220) provided on one surface of the plate body (210) that faces the reaction layer (100), the wave pattern (220) being configured to define a reaction channel (221) disposed between the reaction layer (100) and the plate body (210) and provided in a first direction in which a reactant gas is supplied, so that the reactant gas flows along the reaction channel (221); and
a land (230) continuously provided along a lateral end of the wave pattern (220) and disposed to be in contact with the reaction layer (100).

2. The separator (200) of claim 1, wherein the wave pattern (220) comprises:
a crest portion (222) protruding from one surface of the plate body (210) that faces the reaction layer (100); and
a trough portion (224) connected to an end of the crest portion (222) based on the first direction and configured to define a continuous waveform together with the crest portion (222).

3. The separator (200) of claim 2, wherein the crest portion (222) comprises:
a first inclined portion (222a) configured to guide the reactant gas toward the reaction layer (100); and
a second inclined portion (222c) disposed at a downstream side of the first inclined portion (222a) and configured to guide the reactant gas, which has passed through the first inclined portion (222a), toward the plate body (210).

4. The separator (200) of claim 3, wherein the first inclined portion (222a) is defined to have a first angle with respect to the plate body (210), and the second inclined portion (222c) is defined to have a second angle with respect to the plate body (210), the second angle being different from the first angle.

5. The separator (200) of claim 4, wherein the first angle is smaller than the second angle.

6. The separator (200) of any one of claims 3 to 5, wherein the crest portion (222) comprises a flat portion (222b) provided between the first inclined portion (222a) and the second inclined portion (222c).

7. The separator (200) of any one of claims 2 to 6, comprising:
a cooling channel (240) provided in the other surface of the plate body (210) and configured to allow a coolant to flow therethrough.

8. The separator (200) of claim 7, wherein the cooling channel (240) is defined along an internal space of the land (230).

9. The separator (200) of claim 7 or 8, comprising:
a connection cooling channel (250) provided in the other surface of the plate body (210) and configured to connect the adjacent cooling channels (240) so that the adjacent cooling channels (240) communicate with each other.

10. The separator (200) of claim 9, wherein the connection cooling channel (250) is defined along an internal space of the crest portion (222).

11. The separator (200) of any one of claims 2 to 10, wherein the reaction channel (221) comprises:
an inlet portion (221a) through which the reactant gas is introduced;
a central portion (221b) defined at a downstream side of the inlet portion (221a); and
an outlet portion (221c) defined at a downstream side of the central portion (221b) and configured to allow the reactant gas to be discharged therethrough, and
wherein the crest portion (222) is provided in at least any one of the inlet portion (221a), the central portion (221b), and the outlet portion (221c).

12. The separator (200) of claim 11, wherein the crest portion (222) is provided in plural, and the plurality of crest portions (222) are spaced apart from one another in the first direction, and
wherein the inlet portion (221a), the central portion (221b), and the outlet portion (221c) are defined to be different from one another in terms of reference distances between the adjacent crest portions (222).

13. The separator (200) of claim 12 wherein the reference distances decrease toward the downstream side based on the first direction.

14. The separator (200) of any one of claims 2 to 13, wherein the crest portion (222) is defined to have a preset reference height in a third direction that is a thickness direction of the plate body (210).

15. The separator (200) of any one of claims 2 to 14, wherein the wave pattern (220) comprises:
a first crest portion (222') provided on one surface of the plate body (210) and defined to have a first reference height in a third direction that is a thickness direction of the plate body (210); and
a second crest portion (222") spaced apart from the first crest portion (222') in the first direction, provided at a downstream side of the first crest portion (222'), and defined to have a second reference height greater than the first reference height.

## Patentansprüche

1. Separator (200) für eine Brennstoffzelle, der auf eine Reaktionsschicht (100) gestapelt ist, die eine Membran-Elektroden-Anordnung, MEA, (110) aufweist, wobei der Separator (200) aufweist:
einen Plattenkörper (210), der auf die Reaktionsschicht (100) gestapelt ist,
ein Wellenmuster (220), das auf einer Fläche des Plattenkörpers (210) bereitgestellt ist, die der Reaktionsschicht (100) zugewandt ist, wobei das Wellenmuster (220) konfiguriert ist, um einen Reaktionskanal (221) zu definieren, der zwischen der Reaktionsschicht (100) und dem Plattenkörper (210) angeordnet ist und in einer ersten Richtung bereitgestellt ist, in der ein Reaktionsgas zugeführt wird, so dass das Reaktionsgas entlang des Reaktionskanals (221) strömt, und
einen Steg (230), der kontinuierlich entlang eines seitlichen Endes des Wellenmusters (220) bereitgestellt ist und angeordnet ist, um mit der Reaktionsschicht (100) in Kontakt zu sein.

2. Separator (200) gemäß Anspruch **1,** wobei das Wellenmuster (220) aufweist:
einen Scheitelabschnitt (222), der von einer Fläche des Plattenkörpers (210) hervorsteht, die der Reaktionsschicht (100) zugewandt ist, und
einen Talabschnitt (224), der mit einem Ende des Scheitelabschnitts (222) basierend auf der ersten Richtung verbunden ist und konfiguriert ist, um zusammen mit dem Scheitelabschnitt (222) eine kontinuierliche Wellenform zu definieren.

3. Separator (200) gemäß Anspruch **2,** wobei der Scheitelabschnitt (222) aufweist:
einen ersten Neigungsabschnitt (222a), der konfiguriert ist, um das Reaktionsgas in Richtung zu der Reaktionsschicht (100) zu leiten, und
einen zweiten Neigungsabschnitt (222c), der an einer Stromabwärtsseite des ersten Neigungsabschnitts (222a) angeordnet ist und konfiguriert ist, um das Reaktionsgas, das durch den ersten Neigungsabschnitt (222a) hindurchgetreten ist, in Richtung zum Plattenkörper (210) zu leiten.

4. Separator (200) gemäß Anspruch **3,** wobei der erste Neigungsabschnitt (222a) definiert ist, um einen ersten Winkel in Bezug auf den Plattenkörper (210) zu haben, und der zweite Neigungsabschnitt (222c) definiert ist, um einen zweiten Winkel in Bezug auf den Plattenkörper (210) zu haben, wobei der zweite Winkel sich vom ersten Winkel unterscheidet.

5. Separator (200) gemäß Anspruch **4,** wobei der erste Winkel kleiner als der zweite Winkel ist.

6. Separator (200) gemäß irgendeinem der Ansprüche 3 bis **5,** wobei der Scheitelabschnitt (222) einen flachen Abschnitt (222b) aufweist, der zwischen dem ersten Neigungsabschnitt (222a) und dem zweiten Neigungsabschnitt (222c) bereitgestellt ist.

7. Separator (200) gemäß irgendeinem der Ansprüche 2 bis **6,** aufweisend:
einen Kühlkanal (240), der in der anderen Fläche des Plattenkörpers (210) bereitgestellt ist und konfiguriert ist, um einem Kühlmittel ein Hindurchströmen zu ermöglichen.

8. Separator (200) gemäß Anspruch **7,** wobei der Kühlkanal (240) entlang eines Innenraums des Stegs (230) definiert ist.

9. Separator (200) gemäß Anspruch 7 oder 8, aufweisend:
einen Verbindungskühlkanal (250), der in der anderen Fläche des Plattenkörpers (210) bereitgestellt ist und konfiguriert ist, um die benachbarten Kühlkanäle (240) zu verbinden, so dass die benachbarten Kühlkanäle (240) miteinander kommunizieren.

10. Separator (200) gemäß Anspruch 9, wobei der Verbindungskühlkanal (250) entlang eines Innenraums des Scheitelabschnitts (222) definiert ist.

11. Separator (200) gemäß irgendeinem der Ansprüche 2 bis 10, wobei der Reaktionskanal (221) aufweist:
einen Einlassabschnitt (221a), durch den hindurch das Reaktionsgas eingeführt wird,
einen zentralen Abschnitt (221b), der an einer Stromabwärtsseite des Einlassabschnitts (221a) definiert ist, und
einen Auslassabschnitt (221c), der an einer Stromabwärtsseite des zentralen Abschnitts (221b) definiert ist und konfiguriert ist, um zu ermöglichen, dass das Reaktionsgas dadurch hindurch ausgegeben wird, und
wobei der Scheitelabschnitt (222) in mindestens irgendeinem von dem Einlassabschnitt (221a), dem zentralen Abschnitt (221b) und dem Auslassabschnitt (221c) bereitgestellt ist.

12. Separator (200) gemäß Anspruch 11, wobei der Scheitelabschnitt (222) mehrfach bereitgestellt ist und die Mehrzahl von Scheitelabschnitten (222) in der ersten Richtung im Abstand voneinander angeordnet sind, und
wobei der Einlassabschnitt (221a), der zentrale Abschnitt (221b) und der Auslassabschnitt (221c) definiert sind, um sich hinsichtlich Referenzabständen zwischen den benachbarten Scheitelabschnitten (222) voneinander zu unterscheiden.

13. Separator (200) gemäß Anspruch 12, wobei die Referenzabstände in Richtung zu der Stromabwärtsseite basierend auf der ersten Richtung abnehmen.

14. Separator (200) gemäß irgendeinem der Ansprüche 2 bis 13, wobei der Scheitelabschnitt (222) definiert ist, um eine voreingestellte Referenzhöhe in einer dritten Richtung zu haben, die eine Dickenrichtung des Plattenkörpers (210) ist.

15. Separator (200) gemäß irgendeinem der Ansprüche 2 bis 14, wobei das Wellenmuster (220) aufweist:
einen ersten Scheitelabschnitt (222'), der auf einer Fläche des Plattenkörpers (210) bereitgestellt ist und definiert ist, um eine erste Referenzhöhe in einer dritten Richtung zu haben, die eine Dickenrichtung des Plattenkörpers (210) ist, und
einen zweiten Scheitelabschnitt (222''), der von dem ersten Scheitelabschnitt (222') in der ersten Richtung im Abstand angeordnet ist, an einer Stromabwärtsseite des ersten Scheitelabschnitts (222') bereitgestellt ist und definiert ist, um eine zweite Referenzhöhe zu haben, die größer als die erste Referenzhöhe ist.

## Revendications

1. Séparateur (200) pour pile à combustible, qui est empilé sur une couche de réaction (100) comprenant un ensemble membrane-électrode, MEA, (110), le séparateur (200) comprenant :
un corps de plaque (210) empilé sur la couche de réaction (100) ;
un motif ondulé (220) prévu sur une surface du corps de plaque (210) qui fait face à la couche de réaction (100), le motif ondulé (220) étant configuré pour définir un canal de réaction (221) disposé entre la couche de réaction (100) et le corps de plaque (210) et prévu dans une première direction dans laquelle un gaz réactif est fourni, de sorte que le gaz réactif s'écoule le long du canal de réaction (221) ; et
une traverse (230) prévue de manière continue le long d'une extrémité latérale du motif ondulé (220) et disposée de manière à être en contact avec la couche de réaction (100).

2. Séparateur (200) selon la revendication **1,** dans lequel le motif ondulé (220) comprend :
une partie de crête (222) faisant saillie à partir d'une surface du corps de plaque (210) qui fait face à la couche de réaction (100) ; et
une partie de creux (224) reliée à une extrémité de la partie de crête (222) sur la base de la première direction et configurée pour définir une forme d'onde continue avec la partie de crête (222).

3. Séparateur (200) selon la revendication **2,** dans lequel la partie de crête (222) comprend :
une première partie inclinée (222a) configurée pour guider le gaz réactif vers la couche de réaction (100) ; et
une deuxième partie inclinée (222c) disposée sur un côté aval de la première partie inclinée (222a) et configurée pour guider le gaz réactif, qui a traversé la première partie inclinée (222a), vers le corps de plaque (210).

4. Séparateur (200) selon la revendication 3, dans lequel la première partie inclinée (222a) est définie pour avoir un premier angle par rapport au corps de plaque (210), et la deuxième partie inclinée (222c) est définie pour avoir un deuxième angle par rapport au corps de plaque (210), le deuxième angle étant différent du premier angle.

5. Séparateur (200) selon la revendication 4, dans lequel le premier angle est plus petit que le deuxième angle.

6. Séparateur (200) selon l'une quelconque des revendications 3 à 5, dans lequel la partie de crête (222) comprend une partie plate (222b) prévue entre la première partie inclinée (222a) et la deuxième partie inclinée (222c).

7. Séparateur (200) selon l'une quelconque des revendications 2 à 6, comprenant :
un canal de refroidissement (240) prévu dans l'autre surface du corps de plaque (210) et configuré pour permettre à un réfrigérant de s'écouler à travers celui-ci.

8. Séparateur (200) selon la revendication 7, dans lequel le canal de refroidissement (240) est défini le long d'un espace interne de la partie plate (230).

9. Séparateur (200) selon la revendication 7 ou 8, comprenant :
un canal de refroidissement de connexion (250) prévu dans l'autre surface du corps de plaque (210) et configuré pour connecter les canaux de refroidissement adjacents (240) de sorte que les canaux de refroidissement adjacents (240) communiquent les uns avec les autres.

10. Séparateur (200) selon la revendication **9,** dans lequel le canal de refroidissement de connexion (250) est défini le long d'un espace interne de la partie de crête (222).

11. Séparateur (200) selon l'une quelconque des revendications 2 à 10, dans lequel le canal de réaction (221) comprend :
une partie d'entrée (221a) à travers laquelle le gaz réactif est introduit ;
une partie centrale (221b) définie sur un côté aval de la partie **d'entrée** (221a) ; et
une partie de sortie (221c) définie sur un côté aval de la partie centrale (221b) et configurée pour permettre au gaz réactif d'être évacué à travers celle-ci, et
dans lequel la partie de crête (222) est prévue dans au moins l'une quelconque parmi la partie d'entrée (221a), la partie centrale (221b) et la partie de sortie (221c).

12. Séparateur (200) selon la revendication 11, dans lequel la partie de crête (222) est prévue en plusieurs exemplaires, et la pluralité de parties de crête (222) sont espacées les unes des autres dans la première direction, et
dans lequel la partie d'entrée (221a), la partie centrale (221b) et la partie de sortie (221c) sont définies de manière à être différentes les unes des autres en termes de distances de référence entre les parties de crête adjacentes (222).

13. Séparateur (200) selon la revendication 12, dans lequel les distances de référence diminuent vers le côté aval sur la base de la première direction.

14. Séparateur (200) selon l'une quelconque des revendications 2 à 13, dans lequel la partie de crête (222) est définie pour avoir une hauteur de référence prédéfinie dans une troisième direction qui est une direction d'épaisseur du corps de plaque (210).

15. Séparateur (200) selon l'une quelconque des revendications 2 à 14, dans lequel le motif ondulé (220) comprend :
une première partie de crête (222') prévue sur une surface du corps de plaque (210) et définie de manière à avoir une première hauteur de référence dans une troisième direction qui est une direction d'épaisseur du corps de plaque (210) ; et
une deuxième partie de crête (222") espacée de la première partie de crête (222') dans la première direction, prévue sur un côté aval de la première partie de crête (222'), et définie de manière à avoir une deuxième hauteur de référence supérieure à la première hauteur de référence.
